# EUROPEAN PATENT SPECIFICATION

(11) **EP 0 568 378 B1**
(45) Date of publication and mention of the grant of the patent: **23.06.1999**
(21) Application number: 93303381.3
(22) Date of filing: 29.04.1993
(51) Int. Cl.: A01N 47/26, A01N 47/14, A01N 25/14

(54) **Fungicidal compositions**
Fungizide Zusammensetzungen
Compositions fongicides

(30) Priority: 01.05.1992 US 877010
(43) Date of publication of application: 03.11.1993
(73) Proprietor: ROHM AND HAAS COMPANY, Philadelphia Pennsylvania 19105 (US)
(72) Inventor: Guo, Yili, Maple Glen, Pennsylvania 19002 (US)
(74) Representative: Buckley, Guy Julian

(56) References cited:
- WO-A-89/09597
- CH-A- 470 369
- DE-B- 1 082 764
- DE-B- 1 202 266
- US-A- 2 848 297
- US-A- 3 497 598
- US-A- 3 737 551
- US-A- 5 001 150
- DATABASE WPI Week 8425, Derwent Publications Ltd., London, GB; AN 83-810095 (45)
- CHEMICAL ABSTRACTS, vol. 70, no. 3 Columbus, Ohio, US; abstract no. 10569b, P.GRANDJEAN 'Moisture determination in dithiocarbamate-containing fungicides'

## Description

The present invention is concerned with a method of producing a particulate composition comprising dithiocarbamate and/or bisdithiocarbamoyl disulfide.

Fungicidal dithiocarbamate and bisdithiocarbamoyl disulfide compounds have utility when contained in particulate compositions as ponders or granules. Such powders or granules are commonly dispersed, dissolved or otherwise mixed into liquids to form slurries or other mixtures for use in agricultural sprays. Such mixtures are frequently made at the site of application after prior storage of the particulate compositions.

The storage, handling, dispersal and application of such dithiocarbamate and bisdithiocarbamoyl disulfide compositions can have attendant complications and problems. Overcoming such problems can require the addition of further components to the compositions or the incorporation of additional steps in the formulation process. Examples are the addition of stabilizing agents to prevent degradation during storage; or costly binders or production methods to reduce attrition and undersizing of particles which lead to dustiness and product loss; addition of dispersing, wetting and surfacting agents; and use of mechanical methods to assist in formulating and handling spray mixtures. Also desired is the minimization of undesirable by-products, for example ethylenethiourea (ETU), created during the formulation process. Thus there continues to be a need for fungicidal dithiocarbamate and bisdithiocarbamoyl disulfide compositions with improved characteristics as well as for methods of producing such compositions.

DD-207462 discloses the production of Mn/Zn ethylenebisdithiocarbamate in which NH₄ ethylenebisdithiocarbamate is reacted with inorganic Mn and Zn salts in an aqueous medium to obtain a product comprising more than 50% by weight of particles larger than 40 micrometers, the product is filtered off and diluted with water and wet milled until at least 60% by weight of the product has a particle size of 35 micrometers or less, the slurry is spray dried to a moisture content of 10% by weight, and the product is dried to a moisture content of 0.2 to 2% by weight. The is no disclosure of spray drying a slurry comprising particles of dithiocarbamate and/or bisdithiocarbamoyl disulfide, wherein the particles have a median particle size of from 2 to 7 micrometers, to produce a product having a moisture content of from 2.5 to 20 weight percent.

We have now surprisingly discovered that a number of the above-mentioned disadvantages with physical properties can be overcome by the provision of a novel process for manufacturing dithiocarbamate and bisdithiocarbamoyl disulfide compositions, which results in compositions having a higher moisture content than known compositions. The same process also surprisingly yields compositions having a lower ETU content than known compositions.

Accordingly the present invention provides a method of producing a particulate composition comprising from 20 to 95 wt % of dithiocarbamate and/or bisdithiocarbamoyl disulfide, said method comprising
(1) creating a slurry comprising particles of said dithiocarbamate and/or bisdithiocarbamoyl disulfide, said particles having a median particle diameter of from 2 to 7 micrometers; and
(2) spray-drying said slurry to produce said particulate composition with a moisture content of front 2.5 to 20 wt %, preferably from 2.5 to 10 wt%.

Preferably, the particulate composition has, after production, an initial; ethylenethiourea content of less than 0.1 wt %, preferably from 0.01 to 0.05 wt %, of the composition.

The increased moisture content of the compositions produced according to the invention, compared with those of the prior art, significantly enhances the flowability of the particulate composition, reduces the dustiness of the composition, and increases the bulk density of the composition. It is also believed to contribute to the reduced ethylenethiourea content of the composition in cases where ETU is produced.

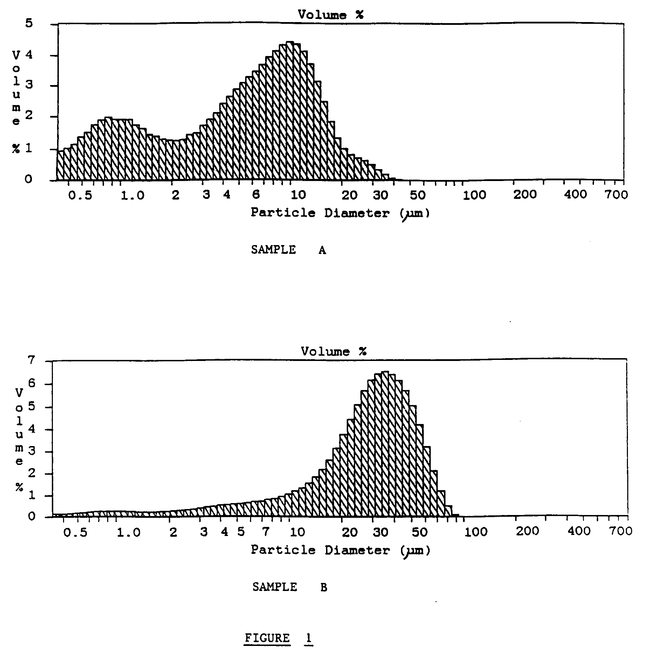

Figure 1 depicts two particle size distribution charts for a Sample A (low moisture compositions of the prior art) and Sample B (controlled moisture compositions produced according to the invention).

Preferably, the one or more dithiocarbamate(s) is selected from ethylenebisdithiocarbamate metal salts, dimethyldithiocarbamate metal salts and propylenebisdithiocarbamate metal salts. Preferred ethylenebisdithiocarbamate metal salts are mancozeb (a coordination product of zinc and manganese ethylene bisdithiocarbamate), maneb (manganese ethylenebisdithiocarbamate) and zineb (zinc ethylene-bisdithiocarbamate). A preferred dimethyldithiocarbamate metal salt is ziram (zinc dimethyldithiocarbamate). A preferred propylene-bisdithiocarbamate metal salt is propineb ([[(1-methyl-1,2-ethanediyl) bis[carbamatothioato]](2-)]zinc homopolymer). Another preferred dithiocarbamate is metiram (tris[amine-[ethylene bis(dithiocarbamato)]zinc(II)][tetrahydro-1,2,4,7-dithiadia-zocine-3,8-dithione] polymer). A preferred bisdithiocarbamoyl disulfide is thiram (bis(dimethylthiocarbamoyl)disulfide). These preferred metal salt(s) and bisdithiocarbamoyl disulfide nay be present alone or in combinations.

Preferably, the total weight of the components selected from dithiocarbamates and bisdithiocarbamoyl disulfides is from 20 to 95 weight percent of the total composition; more preferably, at least 50 % by weight; and even more preferably, at least 80 % by weight.

The moisture content can be a wide variety of materials in liquid or vapor form and in a chemically bonded, hydrated or unhydrated state. In one preferred embodiment, the moisture is comprised of one or more component(s) selected from water, alcohol, ammonia, carbon disulfide and glycol. More preferably, the moisture content is substantially all water, in which case it is always bound water. The moisture content is preferably from 2.5 to 10 % of the particulate compositions by weight. In one preferred embodiment the moisture content is substantially all water of hydration.

The compositions produced according to the invention having an elevated moisture content may have significantly enhanced flowability relative to known compositions. Preferably the flowability of compositions produced according to the invention is such that the angle of repose for such compositions is no more than sixty degrees from the horizontal.

Compositions produced according to the invention, after production, can have an initial ethylenethiourea content of less than 0.1 weight percent of the total composition weight. In a preferred composition the dithiocarbamate comprises mancozeb and the initial ethylenethiourea content is from 0.01 to 0.05 weight percent of the total composition weight. More preferably, the ethylenethiourea content of the particulate composition maintained at a temperature of about 54 °C, for two weeks after production of the composition (a standard stability test for agricultural products) is less than 0.3 weight percent, more preferably from 0.10 to 0.25 weight percent, even more preferably less than 0.20 weight percent of the total composition weight. Another composition maintained at a temperature of about 54 °C for four weeks after production of the composition, preferably has an ethylenethiourea content of less than 0.3 weight percent, more preferably less than 0.15 weight percent of the total composition weight.

The compositions produced according to the invention preferably have a bulk density of at least 0.5 g cm⁻³, more preferably at least 0.75 g cm⁻³, even more preferably from 0.75 to 1.0 g cm⁻³. In one embodiemt the composition has a bulk density of from 0.5 to 1 g cm⁻³.

Compositions preferably have a dry particle median size (ie diameter) range of from 20 to 400 micrometers (µm). Preferably, the particle size and distribution is such that the embodied composition has a significantly reduced dustiness, that is, reduced volume of particles with particle diameters less than 5 micrometers, more preferably less than 10 micrometers, such that the volume of dry particles having a diameter of less than 5, preferably less than 10, and more preferably less than 15, micrometers is no more than 50%, and preferably no more than 25%, of the total volume of dry particles present when said composition is dried to a moisture content of 1%. Also, in some preferred embodiments the volume percent amount of dry particles greater than about 20 micrometers is at least about 50 percent of the volume percent amount of dry particles present when said composition is dried to 1 percent moisture content.

A preferred composition comprises (a) particles comprising one or more components selected from ethylenebisdithiocarbamate metal salts, dimethyldithiocarbamate metal salts, propylenedithiocarbamate metal salts, metiram and thiram, and (b) water; wherein the total weight of said components is from 20 to 90 weight per cent of said composition and wherein said composition has a bulk density of at least 0.5 gram per cubic centimeter and the character of an angle of repose of at most sixty degrees and wherein at least fifty per cent by volume of said particles as dry particles have a diameter greater than five micrometers.

In the case where said dithiocarbamate is mancozeb, the particles in the slurry preferably have a median particle size of from 3 to 6 micrometers.

The slurry, used in step (1) of the method of the invention, may be produced by wet-milling a first slurry comprising particles of a dithiocarbamate and/or bisdithiocarbamoyl disulfide, one or more water soluble zinc salts, preferably zinc chloride or zinc sulphate, and water.

In one preferred method the first slurry comprises
(a) at least ten (10), preferably at least fifty (50), weight percent of a wet cake of maneb;
(b) manganese ions and zinc ions in a respective mole ratio of ten to one; and
(c) at least forty (40) weight percent of water.
Even more preferably, the first slurry has at least fifty (50) weight percent of a wet cake of maneb and the second slurry has a median particle size of about 5 micrometers.

In further embodiments, the first slurry composition further comprises at least 2 weight percent of one or more additive(s) selected from stabilizing agents, dispersing agents, anti-foam agents, wetting agents, binding agents, filler agents and extending agents.

The following experiments illustrate embodiments of the present invention but are not intended to limit the scope thereof.

### Experiment 1 - Production of Dithiocarbamate Slurries

Formulation of nine dithiocarbamate slurries was performed by admixing components to create each slurry with about the following composition:

| Component | Weight percent |
|---|---|
| Wet Cake (about 60% Mn EBDC*) | 72.07 |
| Dispersant** | 2.60 |
| Antifoam agent | 0.02 |
| Hexamethylenetetramine Stabilizer | 1.42 |
| ZnSO4 ·7H20 | 4.85 |
| Water | 19.04 |

| | |
|---|---|
| * "Mn EBDC" - manganese ethylenebisdithiocarbamate | |
| ** The production for each slurry was the same except that the slurries for samples 1-D, 1-W, 2-W, 3-W and 4-W had Wafex™ dispersant as the dispersant and the slurries for samples 1-R, 2-R, 3-R and 4-R had Reax 100M™ dispersant as the dispersant. | |

After creation, each slurry was then wet-milled to a median particle size of about five (5) micrometres.

### Experiment 2 - Production of Sample 1-D Composition (comparative)

The slurry for Sample 1-D from experiment 1 was spray-dried with an inlet temperature of about 320-330°C and an outlet temperature of about 80°C to produce an intermediate composition which was subjected to a second drying stage to produce Sample 1-D.

### Experiment 3 - Production of Sample 1-W, 2-W, 3-W, 4-W, 1-R, 2-R, 3-R and 4-R Compositions (invention)

The procedure from Experiment 1 was used to produce eight (8) slurry samples; 1-W, 2-W, 3-W, and 4-W for the first set and 1-R, 2-R, 3-R, and 4-R for the second set. The eight slurry samples were then treated to a single spray-drying without a second drying stage. The respective spray drying conditions were an inlet temperature of 320-330°C and the following outlet temperatures:

| Samples | Outlet Temperature |
|---|---|
| 1-W, 1-R | 115°C |
| 2-W, 2-R | 100°C |
| 3-W, 3-R | 90°C |
| 4-W, 4-R | 70°C |

**Table I**

| **Initial Properties** | | | | |
|---|---|---|---|---|
| Sample No. | H₂O (%)* | Particle Size** (µm) | | ETU*** (%)* |
| | | 50%* | 90%* | |
| 1-D | 0.9 | 6.0 | 12.5 | 0.12 (comparative) |
| 1-W | 3.3 | 5.9 | 17.8 | 0.13 |
| 1-R | 4.0 | 6.4 | 17.3 | 0.13 |
| 2-R | 6.8 | 6.3 | 17.9 | 0.12 |
| 2-W | 7.0 | 5.6 | 17.2 | 0.097 |
| 3-R | 9.8 | 7.2 | 18.9 | 0.071 |
| 3-W | 10.3 | 6.2 | 18.0 | 0.087 |
| 4-R | 12.0 | 14.9 | 48.6 | 0.057 |
| 4-W | 13.1 | 14.9 | 43.1 | 0.024 |

| **After 2 weeks at 54°C** | | | | |
|---|---|---|---|---|
| Sample No. | H₂O (%) | Particle Size (µm) | | ETU (%) |
| | | 50% | 90% | |
| 1-D | 0.79 | 6.0 | 12.4 | 0.28 (comparative) |
| 1-W | 2.7 | 7.2 | 22.7 | 0.22 |
| 1-R | 2.7 | 5.5 | 16.2 | 0.24 |
| 2-W | 6.8 | 6.4 | 19.8 | 0.20 |
| 2-R | 6.8 | 7.9 | 23.6 | 0.16 |
| 3-R | 9.1 | 9.7 | 26.9 | 0.15 |
| 3-W | 9.4 | 8.0 | 23.3 | 0.17 |
| 4-R | 10.1 | 41.6 | 77.5 | 0.10 |
| 4-W | 10.3 | 27.1 | 61.9 | 0.11 |

| **After 4 weeks at 54°C** | | | | |
|---|---|---|---|---|
| Sample No. | H₂O (%) | Particle Size (µm) | | ETU (%) |
| | | 50% | 90% | |
| 1-D | 0.80 | 6.5 | 13.3 | 0.20 (comparative) |
| 1-W | 2.8 | 11.5 | 31.6 | 0.14 |
| 1-R | 3.2 | 8.5 | 27.3 | 0.14 |
| 2-W | 7.3 | 9.1 | 28.6 | 0.12 |
| 2-R | 7.1 | 12.9 | 35.6 | 0.082 |
| 3-R | 10.1 | 13.1 | 37.5 | 0.089 |
| 3-W | 10.2 | 16.1 | 39.1 | 0.068 |
| 4-R | 11.1 | 30.8 | 51.1 | 0.023 |
| 4-W | 10.5 | 40.9 | 73.2 | 0.011 |

| | | | | |
|---|---|---|---|---|
| *For the entire Table I all H₂O and ETU "%" are by weight and all Particle Size "%" are by volume. | | | | |
| ** After redispersion in H₂O. | | | | |
| *** ETU is ethylenethiourea | | | | |

### Experiment 4 - Dry Particle Size Analysis

Particle size analysis was performed to compare the particle size distribution in a low moisture dithiocarbamate composition (Sample A, same as 1-D hereinabove) and a relatively higher moisture dithiocarbamate composition (Sample B, prepared substantially same but with higher water content). The samples had the following characteristics:

**Table II**

| Sample | A | B |
|---|---|---|
| H₂O content: | < 1 % | 3.7 % |
| Median Particle Size: | 5.9 µm | 29.9 µm |

| Particle Size Distribution: | | |
|---|---|---|
| | A | B |
| 10% | ≤ 0.8 µm | ≤ 7.1 µm |
| 50% | ≤ 5.9 µm | ≤ 29.9 µm |
| 75% | ≤ 10.4 µm | ≤ 42.7 µm |
| 90% | ≤ 14.9 µm | ≤ 55.0 µm |

The distribution is charted in Figure 1, which illustrates a significantly different distribution of particle diameters. Dry particle size analysis of other samples was performed with the following results.

**Table III**

| Sample | H₂O% | Median Particle (micrometres) |
|---|---|---|
| 1-D | <1 | 5.9 |
| 2-W | 7 | 56 |
| 3-W | 10 | 62 |
| 2-R | 7 | 57 |
| 3-R | 10 | 63 |

The following comparison of bulk densities were determined:

**Table IV**

| Sample | H₂O(%) | Bulk Density (g/cm⁻³) |
|---|---|---|
| 1-D | 0.98 | 0.45 |
| 2-W | 7.0 | 0.71 |

## Claims

1. A method of producing a particulate composition comprising from 20 to 95 wt % of dithiocarbamate and/or bisdithiocarbamoyl disulfide, said method comprising
(1) creating a slurry comprising particles of said dithiocarbamate and/or bisdithiocarbamoyl disulfide, said particles having a median particle diameter of from 2 to 7 µm; and
(2) spray-drying said slurry to produce said particulate composition with a moisture content of from 2.5 to 20 wt %, preferably from 2.5 to 10 wt %.

2. Method according to claim 1, wherein the moisture content comprises one or more of water, alcohol, ammonia, carbon disulfide or glycol, and is preferably substantially all water, more preferably water of hydration.

3. Method according to claim 1 or claim 2, wherein the composition has a bulk density of at least 0.5 g cm⁻³, preferably from 0.5 to 1 g cm⁻³.

4. Method according to any preceding claim, wherein the composition has a median dry particle diameter of from 20 to 400 µm.

5. Method according to any preceding claim, wherein the total weight of dithiocarbamate and/or bisdithiocarbamoyl disulfide is from 50 to about 95 wt % of said composition.

6. Method according to any preceding claim, wherein the composition has, immediately after production, an initial ethylenethiourea content of less than 0.1 wt %, preferably from 0.01 to 0.05 wt % of the composition.

7. Method according to claim 6, wherein the ethylenethiourea content of said composition maintained at a temperature of about 54°C for two weeks after production thereof is less than 0.3 wt %, preferably from 0.1 to 0.25 wt % of the composition.

8. Method according to claim 6 or 7, wherein the ethylenethiourea content of said composition maintained at a temperature of about 54°C for four weeks after production thereof is less than 0.3 wt %, preferably less than 0.15 wt % of the composition.

9. Method according to any preceding claim, wherein in the particulate composition the volume of dry particles having a diameter of less than 5, preferably less than 10, and more preferably less than 15, µm is no more than 50%, and preferably no more 25%, of the total volume of dry particles present when said composition is dried to a moisture content of 1%.

10. Method according to any preceding claim, wherein in the particulate composition the volume of dry particles having a diameter greater than 20 µm is at least 50% of the volume of dry particles present when said composition is dried to a moisture content of 1%.

11. Method according to any preceding claim, wherein said slurry is produced by wet-milling a first slurry comprising particles of a dithiocarbamate and/or bisdithiocarbamoyl disulfide, one or more water soluble zinc salts, preferably zinc chloride or zinc sulphate, and water.

12. Method according to any preceding claim, wherein the dithiocarbamate or bisdithiocarbamoyl disulfide comprises a ethylenebisdithiocarbamate metal salt, preferably mancozeb, maneb or zineb, a dimethyldithiocarbamate metal salt, a propylenedithiocarbamate metal salt, metiram or thiram.

13. Method according to claim 11, wherein said first slurry comprises
(a) at least 10 wt %, preferably at least 50 wt % of a wet cake of maneb;
(b) manganese ions and zinc ions in a respective mole ratio of ten to one; and
(c) at least 40 wt % water.

14. Method according to any of claims 1 to 12, wherein the dithiocarbamate is mancozeb, and in said slurry said particles have a median particle size of from 3 to 6 µm.

15. Method according to any preceding claim, wherein the particulate composition has an angle of repose of no more than sixty degrees.

## Patentansprüche

1. Verfahren zur Herstellung einer teilchenförmigen Zusammensetzung, umfassend 20 bis 95 Gew.-% Dithiocarbamat und/oder Bisdithiocarbamoyldisulfid, wobei das Verfahren
(1) das Erzeugen einer Aufschlämmung, umfassend die Teilchen von Dithiocarbamat und/oder Bisdithiocarbamoyldisulfid, wobei die Teilchen einen mittleren Teilchendurchmesser von 2 bis 7 µm aufweisen, und
(2) das Sprühtrocknen der Aufschlämmung zur Herstellung der teilchenförmigen Zusammensetzung mit einem Feuchtigkeitsgehalt von 2,5 bis 20 Gew.-%, vorzugsweise von 2,5 bis 10 Gew.-%,
umfaßt.

2. Verfahren nach Anspruch 1, wobei der Feuchtigkeitsgehalt eines oder mehrere ausgewählt aus Wasser, Alkohol, Ammoniak, Kohlenstoffdisulfid oder Glykol umfaßt und vorzugsweise hauptsächlich Wasser, mehr bevorzugt Hydrationswasser, ist.

3. Verfahren nach Anspruch 1 oder 2, wobei die Zusammensetzung eine Schüttdichte von mindestens 0,5 g/cm³, vorzugsweise von 0,5 bis 1 g/cm³, aufweist.

4. Verfahren nach einem vorhergehenden Anspruch, wobei die Zusammensetzung einen mittleren trockenen Teilchendurchmesser von 20 bis 400µm aufweist.

5. Verfahren nach einem vorhergehenden Anspruch, wobei das Gesamtgewicht von Dithiocarbamat und/oder Bisdithiocarbamoyldisulfid 50 bis etwa 95 Gew.-% der Zusammensetzung beträgt.

6. Verfahren nach einem vorhergehenden Anspruch, wobei die Zusammensetzung direkt nach der Herstellung einen anfänglichen Ethylenthioharnstoffgehalt von weniger als 0,1 Gew.-%, vorzugsweise von 0,01 bis 0,05 Gew.-% der Zusammensetzung aufweist.

7. Verfahren nach Anspruch 6, wobei der Ethylenthioharnstoffgehalt der Zusammensetzung, gehalten bei einer Temperatur von etwa 54°C für zwei Wochen nach deren Herstellung, weniger als 0,3 Gew.-%, vorzugsweise 0,1 bis 0,25 Gew.-% der Zusammensetzung beträgt.

8. Verfahren nach Anspruch 6 oder 7, wobei der Ethylenthioharnstoffgehalt der Zusammensetzung, gehalten bei einer Temperatur von etwa 54°C für vier Wochen nach deren Herstellung, weniger als 0,3 Gew.-%, vorzugsweise weniger als 0,15 Gew.-% der Zusammensetzung beträgt.

9. Verfahren nach einem vorhergehenden Anspruch, wobei in der teilchenförmigen Zusammensetzung das Volumen der trockenen Teilchen, die einen Durchmesser von weniger als 5, vorzugsweise von weniger als 10 und mehr bevorzugt von weniger als 15 µm aufweisen, nicht mehr als 50% und vorzugsweise nicht mehr als 25% des Gesamtvolumens der vorhandenen trockenen Teilchen beträgt, wenn die Zusammensetzung bis zu einem Feuchtigkeitsgehalt von 1% getrocknet wird.

10. Verfahren nach einem vorhergehenden Anspruch, wobei in der teilchenförmigen Zusammensetzung das Volumen der trockenen Teilchen, die einen Durchmesser von größer als 20 µm aufweisen, mindestens 50% des Volumens der vorhandenen trockenen Teilchen beträgt, wenn die Zusammensetzung bis zu einem Feuchtigkeitsgehalt von 1% getrocknet wird.

11. Verfahren nach einem vorhergehenden Anspruch, wobei die Aufschlämmung durch Naßmahlen einer ersten Aufschlämmung, umfassend die Teilchen eines Dithiocarbamats und/oder Bisdithiocarbamoyldisulfids, eines oder mehrerer wasserlöslicher Zinksalze, vorzugsweise Zinkchlorid oder Zinksulfat, und Wasser hergestellt wird.

12. Verfahren nach einem vorhergehenden Anspruch, wobei das Dithiocarbamat oder Bisdithiocarbamoyldisulfid ein Metallsalz eines Ethylenbisdithiocarbamats, vorzugsweise Mancozeb, Maneb oder Zineb, ein Metallsalz eines Dimethyldithiocarbamats, ein Metallsalz eines Propylendithiocarbamats, Metiram oder Thiram umfaßt.

13. Verfahren nach Anspruch 11, wobei die erste Aufschlämmung
(a) mindestens 10 Gew.-%, vorzugsweise mindestens 50 Gew.-%, eines feuchten Manabkuchens,
(b) Manganionen und Zinklonen in einem respektiven Verhältnis von 10 zu 1 und
(c) mindestens 40 Gew.-% Wasser
umfaßt.

14. Verfahren nach einem der Ansprüche 1 bis 12, wobei das Dithiocarbamat Mancozeb ist, und in der Aufschlämmung die Teilchen eine mittlere Teilchengröße von 3 bis 6 µm aufweisen.

15. Verfahren nach einem vorhergehenden Anspruch, wobei die teilchenförmige Zusammensetzung einen Schüttwinkel von nicht mehr als 60° aufweist.

## Revendications

1. Procédé de production d'une composition particulaire comprenant de 20 à 95 % en poids d'un dithiocarbamate et/ou d'un disulfure de bisdithiocarbamoyle, ledit procédé consistant à :
(1) créer une suspension comprenant des particules desdits dithiocarbamate et/ou disulfure de bisdithiocarbamoyle, lesdites particules ayant une granulométrie moyenne de 2 à 7 µm ; et
(2) sécher par atomisation ladite suspension pour produire ladite composition particulaire ayant une teneur en humidité de 2,5 à 20 % en poids, de préférence de 2,5 à 10 % en poids.

2. Procédé selon la revendication 1, dans lequel la teneur en humidité est apportée par un ou plusieurs constituants choisis parmi l'eau, un alcool, l'ammoniaque, le disulfure de carbone ou un glycol, et est, de préférence, pratiquement entièrement due à de l'eau, mieux encore de l'eau d'hydratation.

3. Procédé selon la revendication 1 ou 2, dans lequel la composition a une masse volumique apparente d'au moins 0,5 g/cm³, de préférence de 0,5 à 1 g/cm³.

4. Procédé selon l'une quelconque des revendications précédentes, dans lequel la composition a une granulométrie à sec moyenne de 20 à 400 µm.

5. Procédé selon l'une quelconque des revendications précédentes, dans lequel le poids total des dithiocarbamate et/ou disulfure de bisdithiocarbamoyle représente de 50 à environ 95 % en poids de ladite composition.

6. Procédé selon l'une quelconque des revendications précédentes, dans lequel la composition a, immédiatement après production, une teneur en éthylènethiourée initiale inférieure à 0,1 % en poids, de préférence de 0,01 à 0,05 % en poids par rapport à la composition.

7. Procédé selon la revendication 6, dans lequel la teneur en éthylènethiourée de ladite composition maintenue à une température d'environ 54°C pendant deux semaines après sa production est inférieure à 0,3 % en poids, de préférence de 0,1 à 0,25 % en poids par rapport à la composition.

8. Procédé selon la revendication 6 ou 7, dans lequel la teneur en éthylènethiourée de ladite composition maintenue à une température d'environ 54°C pendant quatre semaines après sa production est inférieure à 0,3 % en poids, de préférence inférieure à 0,15 % en poids par rapport à la composition.

9. Procédé selon l'une quelconque des revendications précédentes, dans lequel, dans la composition particulaire, le volume de particules sèches ayant un diamètre inférieur à 5, de préférence inférieur à 10 et mieux encore inférieur à 15 µm ne dépasse pas 50 % et, de préférence, ne dépasse pas 25 % du volume total de particules sèches présentes quand ladite composition est séchée jusqu'à une teneur en humidité de 1 %.

10. Procédé selon l'une quelconque des revendications précédentes, dans lequel, dans la composition particulaire, le volume de particules sèches ayant un diamètre supérieur à 20 µm est d'au moins 50 % du volume de particules sèches présentes quand ladite composition est séchée jusqu'à une teneur en humidité de 1 %.

11. Procédé selon l'une quelconque des revendications précédentes, dans lequel ladite suspension est produite par broyage à l'état humide d'une première suspension comprenant des particules d'un dithiocarbamate et/ou d'un disulfure de bisdithiocarbamoyle, un ou plusieurs sels de zinc solubles dans l'eau, de préférence du chlorure de zinc ou du sulfate de zinc, et de l'eau.

12. Procédé selon l'une quelconque des revendications précédentes, dans lequel le dithiocarbamate ou le disulfure de bisdithiocarbamoyle comprend un sel éthylènebisdithiocarbamate métallique, de préférence le mancozeb, le maneb ou le zineb, un sel diméthyldithiocarbamate métallique, un sel propylènedithiocarbamate métallique, du métiram ou du thiram.

13. Procédé selon la revendication 11, dans lequel ladite première suspension comprend :
(a) au moins 10 % en poids, de préférence au moins 50 % en poids, d'un gâteau humide de maneb ;
(b) des ions manganèse et des ions zinc selon un rapport molaire respectif de dix pour un ; et
(c) au moins 40 % en poids d'eau.

14. Procédé selon l'une quelconque des revendications 1 à 12, dans lequel le dithiocarbamate est le mancozeb, et, dans ladite suspension, lesdites particules ont une granulométrie moyenne de 3 à 6 µm.

15. Procédé selon l'une quelconque des revendications précédentes, dans lequel la composition particulaire a un angle de talus non supérieur à soixante degrés.
